# EUROPÄISCHE PATENTSCHRIFT

(11) **EP 3 130 386 B1**
(45) Veröffentlichungstag und Bekanntmachung des Hinweises auf die Patenterteilung: **27.11.2019**
(21) Anmeldenummer: 16020258.6
(22) Anmeldetag: 04.07.2016
(51) Int. Cl.: B01D 33/76, B01D 29/94

(54) **FILTERANLAGE ZUM REINIGEN EINER FLÜSSIGKEIT**
FILTER SYSTEM FOR CLEANING A LIQUID
INSTALLATION DE FILTRE DE NETTOYAGE D'UN LIQUIDE

(30) Priorität: 11.08.2015 DE 102015113186; 25.02.2016 DE 202016100987 U
(43) Veröffentlichungstag der Anmeldung: 15.02.2017
(73) Patentinhaber: Pfeffer, Ulrich, 73333 Gingen (DE)
(72) Erfinder: Pfeffer, Ulrich, D-73333 Gingen (DE); HECKNER, Stefan, 88276 Berg/Weiler (DE)
(74) Vertreter: Müller, Gottfried

(56) Entgegenhaltungen:
- DE-A1-102006 010 843
- GB-A- 1 093 016
- US-A- 4 557 836

## Beschreibung

Die Erfindung bezieht sich auf eine Filteranlage zum Reinigen einer Flüssigkeit, vorzugsweise aus dem Lebensmittelbereich, beispielsweise von Ölen oder Fetten.

Aus der DE 10 2004 013 934 A1 ist eine Filteranlage zum Reinigen von Ölen oder Fetten bekannt, die bei Lebensmitteln einsetzbar sind. Die Filteranlage umfasst einen Vorfilter und einen nachgeschalteten Feinstfilter, durch den die zu reinigende Flüssigkeit mithilfe einer Pumpe transportiert wird. In den Feinstfilter ist eine Filterpatrone eingebracht, durch die die Flüssigkeit hindurchgeleitet wird.

Aus der DE 27 56 428 C2 ist ein Frittiergerät mit einer Filtereinrichtung zur Entfernung von Speiseresten oder anderen Rückständen aus Frittieröl bekannt. Die Filtereinrichtung weist ein Sieb zur Sammlung der Speisereste auf sowie einen Filter aus Papier oder Stoff. Das Frittieröl wird nach dem Frittieren durch das Sieb und anschließend durch den Papier- oder Stofffilter zum Zurückhalten feinerer Rückstände geleitet, danach wird das Frittieröl über eine Rückführleitung und eine Pumpe zur Frittierpfanne zurückgeführt.

Ein ähnliches Frittiergerät wird in der EP 2 420 168 A1 beschrieben. Das Frittiergerät umfasst einen Vorfilter und einen nachgeschalteten, feinmaschigen Filter zur Entfernung von Speiseresten und anderer Verunreinigungen. Über eine Umwälzpumpe wird das gereinigte Frittieröl wieder in den Frittierkreislauf zurückgeführt.

Des Weiteren ist aus der US 2002/0006460 A1 ein Ölbehandlungssystem zur Entfernung von Partikeln aus Ölen bekannt, insbesondere aus Frittierölen. Das Ölbehandlungssystem umfasst ein Filtersystem mit einem Vorfilter zur Entfernung von Partikeln oberhalb einer bestimmten Größe sowie einen nachgeschalteten Zentrifugalfilter.

Die DE 10 2006 010 843 A1 zeigt eine Filtervorrichtung mit einem Filtergehäuse, in das ein Filterelement integriert ist. Im Anschluss an ein dem Filtergehäuse nachgeschaltetes Ventil befindet sich ein Sedimentationsbehälter. Bei dem Ventil handelt es sich um ein Grobschmutzventil an einem konisch zulaufenden, unteren Abschnitt des Filtergehäuses. Das Grobschmutzventil mündet in eine Spülleitung, in der ein Rückspülungs-Austragventil angeordnet ist, mit dem der Zugang zum nachfolgenden Sedimentationsbehälter sperrbar ist.

Die GB 1,093,016 A zeigt eine Filteranlage mit einer oben liegenden Filtereinheit und einem darunter liegenden Sammeltank, der über ein Ventil von der Filtereinheit separiert ist.

Gemäß eines weiteren Ausführungsbeispiels dieser Druckschrift befindet sich in der Filtereinheit ein Ventil, das während der Filtrierung in Öffnungsposition steht, so dass abgelagerte Partikel in den darunter liegenden Tank geführt werden. Sobald ein definierter Füllstand erreicht ist, wird das Ventil geschlossen und kann der Tank durch Öffnen einer Schleuse entleert werden.

Der Erfindung liegt die Aufgabe zugrunde, mit einfachen konstruktiven Maßnahmen eine Filteranlage zu schaffen, mit der in effizienter Weise Partikel aus einer Flüssigkeit ausfiltriert werden können.

Diese Aufgabe wird erfindungsgemäß mit den Merkmalen des Anspruches 1 gelöst. Die Unteransprüche geben zweckmäßige Weiterbildungen an.

Die erfindungsgemäße Filteranlage wird zum Reinigen von Flüssigkeiten eingesetzt, um Partikel, die die Flüssigkeit verunreinigen, aus dieser abzuscheiden. Bei der Flüssigkeit handelt es sich beispielsweise um Öle oder Fette, insbesondere ein Fittrieröl, in welchem sich bei der Zubereitung von Lebensmitteln wie beispielsweise Pommes frites, Kroketten oder Chips oder auch panierte Fleischprodukte organische Partikel befinden, die aufgrund der hohen Temperatur des Frittieröls Kohlenstoffverbindungen bilden. Diese Rückstände bilden Partikel in dem Frittieröl und können über die erfindungsgemäße Filteranlage ausfiltriert werden.

Darüber hinaus kommt auch eine Anwendung der Filteranlage zum Reinigen von kontaminierten Flüssigkeiten mit Partikeln außerhalb des Lebensmittelbereichs in Betracht, wobei die Partikel chemisch bzw. physikalisch reaktiv sein können und gegebenenfalls gesundheitsschädlich Verunreinigungen darstellen können. Es handelt sich beispielsweise um Flüssigkeiten mit gesundheitsschädlichen, brennbaren, radioaktiven oder in sonstiger Weise schädlichen oder gefährlichen Stoffen, die in Partikelform in einer Flüssigkeit enthalten sind.

Die Filteranlage umfasst eine Vorfiltereinheit zur Separierung der Partikel aus der Flüssigkeit, eine der Vorfiltereinheit nachgeschaltete Ausschleuseeinheit zur Zwischenlagerung der Partikel und eine der Ausschleuseeinheit nachgeschaltete Sammelkammer, in der die abgeschiedenen Partikel gesammelt und aus der die Partikel abgeführt werden können. Die Ausschleuseeinheit, die sich zwischen der Vorfiltereinheit und der Sammelkammer befindet, umfasst mindestens zwei in Reihe geschaltete Ventile sowie ein zwischen den Ventilen angeordnetes Partikelsammelvolumen, beispielsweise ein Partikelsammelrohr. Diese Ausführung ermöglicht es, während des Filtrations- bzw. Abscheideprozesses in der Vorfiltereinheit abgeschiedene Partikel in dem Partikelsammelvolumen der Ausschleuseeinheit temporär aufzunehmen und bis zum Erreichen eines Füllstand-Sollwertes zu sammeln. Zu diesem Zwecke ist das erste Ventil geöffnet, um eine Verbindung zwischen der Vorfiltereinheit und dem Partikelsammelvolumen herzustellen, zugleich ist das zweite Ventil geschlossen, um die Verbindung zwischen dem Partikelsammelvolumen und der nachgeschalteten Sammelkammer zu unterbrechen.

Wenn die in dem Partikelsammelvolumen aufgenommene Partikelmenge einen bestimmten Füllstand und damit den Sollwert erreicht hat, können die Partikel aus dem Partikelsammelvolumen in die Sammelkammer überführt werden. Hierbei wird das erste Ventil zwischen Vorfiltereinheit und Ausschleuseeinheit geschlossen und das zweite Ventil zwischen der Ausschleuseeinheit und der Sammelkammer geöffnet, so dass die Partikel aus dem Partikelsammelvolumen in die Sammelkammer geleitet werden. Aufgrund der unterbrochenen Verbindung zur Vorfiltereinheit ist sichergestellt, dass in dieser Phase keine Flüssigkeit aus der Vorfiltereinheit in die Sammelkammer gelangen kann. Dementsprechend bleiben die Sammelkammer und die in die Sammelkammer geleiteten Partikel zumindest weitgehend frei von der Flüssigkeit, wodurch das Gefahrenpotenzial in der Sammelkammer erheblich reduziert ist. Die Partikel können gefahrlos aus der Sammelkammer entfernt werden.

Die Ausschleuseeinheit ist mit einem dritten Ventil versehen, das zwischen dem ersten und dem zweiten Ventil angeordnet ist und insbesondere bei der Öffnung und Entleerung der Sammelkammer ein zusätzliches Maß an Sicherheit bietet, indem in dieser Phase auch dieses dritte Ventil geschlossen wird. Während des Abscheidevorganges, bei geschlossenem zweiten Ventil zwischen der Ausschleuseeinheit und der Sammelkammer, bleibt das zwischen erstem und zweitem Ventil angeordnete dritte Ventil in seiner Öffnungsposition, um ein ungehindertes Ablagern der Partikel in dem Partikelsammelvolumen zu ermöglichen. Auch beim Entleeren der Partikel aus dem Partikelsammelvolumen in die Sammelkammer bleibt das dritte Ventil geöffnet. Erst zum Entleeren der Sammelkammer wird das dritte Ventil, insbesondere gemeinsam mit den beiden weiteren Ventilen geschlossen, um den Strömungskreislauf in der Vorfiltereinheit sowie die Ausschleuseeinheit von der Sammelkammer zu trennen.

Das dritte Ventil, welches zwischen dem ersten und dem zweiten Ventil angeordnet ist, ist manuell zu betätigen. Hierdurch ist sichergestellt, dass auch bei einem Ausfall der ersten beiden Ventile der Strömungskreislauf der Flüssigkeit in der Vorfiltereinheit von der Sammelkammer separiert ist.

Die ersten beiden Ventile sind über einen Aktuator zwischen ihrer Schließ- und ihrer Öffnungsstellung zu schalten. Der Aktuator ist energetisch angetrieben, vorzugsweise elektrisch, hydraulisch oder pneumatisch ausgeführt. Jedem Ventil ist ein eigener Aktuator zugeordnet, um die Ventile separat ansteuern zu können. Die Ansteuerung erfolgt über Stellsignale, die insbesondere in Abhängigkeit von Zustands- bzw. Kenngrößen der Filteranlage erzeugt werden, nämlich in Abhängigkeit von Sensorsignalen eines Füllstandssensors zur Ermittlung des Partikelfüllstandes in dem Partikelsammelvolumen. Erreicht die in dem Partikelsammelvolumen aufgenommene Partikelmenge einen bestimmten Füllstand-Sollwert, so können die ersten beiden Ventile über ihre Aktuatoren angesteuert und automatisch so geschaltet werden, dass das erste Ventil zwischen der Vorfiltereinheit und dem Partikelsammelvolumen geschlossen und das zweite Ventil zwischen dem Partikelsammelvolumen und der Sammelkammer geöffnet wird, so dass sich die Partikelmenge aus dem Partikelsammelvolumen in die Sammelkammer entleert. Im Anschluss an diesen Vorgang, der gegebenenfalls auch über den Füllstandssensor überwacht werden kann, werden die ersten beiden Ventile in entgegengesetzter Weise angesteuert, so dass das erste Ventil geöffnet und das zweite Ventil geschlossen wird und der Abscheidevorgang mit einer Ablagerung der Partikel in dem Partikelsammelvolumen fortgesetzt werden kann.

In der Filteranlage können weitere Sensoren vorhanden sein, um den Zustand der Filteranlage zu überwachen. Es kann beispielsweise die Temperatur im Innenraum der Sammelkammer sensorisch überwacht werden, des Weiteren zusätzlich oder alternativ der Flüssigkeitsfüllstand im Innenraum der Sammelkammer sowie zusätzlich oder alternativ der Druck im Innenraum der Sammelkammer. Des Weiteren ist es zweckmäßig, dass der aktuelle Fließ- bzw. Öffnungszustand der Ventile sensorisch überwacht wird, insbesondere die Schließposition der Ventile. Auch der Druck und/oder die Temperatur im Partikelsammelvolumen können überwacht werden.

Gemäß noch einer weiteren zweckmäßigen Ausführung ist die Sammelkammer als eine Druckkammer ausgebildet, die in der Lage ist, einen Überdruck aufzunehmen. Aus Sicherheitsgründen ist es zweckmäßig, die Sammelkammer mit einer Sicherheitstür zu versehen, die nur geöffnet werden kann, wenn sicherheitsrelevante Kriterien erfüllt sind, beispielsweise die Temperatur und/oder der Druck in der Sammelkammer definierte Grenzwerte nicht überschreiten.

Gemäß einer weiteren zweckmäßigen Ausführung ist an die Sammelkammer ein Ablaufrohr mit einem Überdruckventil angeschlossen. Dies stellt sicher, dass bei einem hohen Druckanstieg in der Sammelkammer eine Ableitung über das sich öffnende Überdruckventil und das Ablaufrohr erfolgen kann. Falls beispielsweise versehentlich Flüssigkeit aus der Vorfiltereinheit über die Ausschleuseeinheit in die Sammelkammer gelangt, kann bei einem entsprechenden Druckanstieg die Flüssigkeit über das Überdruckventil und das Ablaufrohr abgeleitet werden, insbesondere zurück in ein Sammelbecken, aus dem die Flüssigkeit wieder ihrem Bestimmungszweck zugeführt wird, beispielsweise im Fall von Frittieröl einer Friteuse.

In der Sammelkammer ist ein als Auffangkorb ausgebildeter Auffangbehälter angeordnet, der zum Auffangen der Partikel aus dem Partikelsammelvolumen dient. Die Vorfiltereinheit befindet sich oberhalb der Ausschleuseeinheit und diese wiederum oberhalb der Sammelkammer, so dass die Partikel der Schwerkraft folgend von der Vorfiltereinheit in das Partikelsammelvolumen in der Ausschleuseeinheit gelangen und von dort weiter in die Sammelkammer, in der die Partikel in dem Auffangkorb aufgefangen werden.

Der Auffangkorb kann mit Rollen versehen sein, um ein Herausrollen aus der Sammelkammer zu ermöglichen. Der Auffangkorb ist beispielsweise als kippbarer Korbwagen ausgeführt.

Gemäß einer weiteren Ausführung ist der Auffangkorb fest in die Sammelkammer integriert. Der Auffangkorb bildet einen Abtropfkorb in der Sammelkammer, der die Partikel aufnimmt, wobei Flüssigkeit, insbesondere Öl, die in den Partikeln enthalten ist, aus dem Auffangkorb abgeleitet wird.

Gegebenenfalls ist der Auffangkorb herausnehmbar in die Sammelkammer eingesetzt.

Der Auffangkorb weist gemäß weiterer vorteilhafter Ausführung eine Austragöffnung auf, die von einem Schieber oder einer Klappe geschlossen ist. Die Austragöffnung befindet sich in einem unten liegenden Abschnitt des Auffangkorbs, insbesondere im Bodenbereich des Auffangkorbs, so dass mit dem Öffnen des Schiebers bzw. der Klappe die im Auffangkorb aufgenommenen Partikel nach unten entleert werden können, beispielsweise in einen unterhalb der Sammelkammer stehenden Container.

Vorteilhafterweise verweilen die Partikel in dem Auffangkorb unter Schutzgasatmosphäre, unter der die Partikel abkühlen und noch vorhandene Flüssigkeit vollständig oder weitestgehend ablaufen kann. Im laufenden Betrieb wird der Auffangkorb vorteilhafterweise während mehrerer Ausschleusungsvorgänge mit Partikeln befüllt und kann anschließend nach unten entleert werden. Die Partikel fallen mit minimalen Restflüssigkeitsmengen und weitgehend abgekühlt aus dem Auffangkorb nach unten und werden vorzugsweise in den darunter stehenden Container geleitet.

Diese Vorgehensweise hat den Vorteil, dass große Mengen an Partikel in dem Auffangkorb aufgenommen werden können, ohne den Druck in der Sammelkammer reduzieren zu müssen. Die Partikel werden über mehrere Ausschleusungsvorgänge in dem Auffangkorb aufgenommen, bevor eine Entleerung des Auffangkorbs bei einem Öffnen des Schiebers oder der Klappe erforderlich ist. Die Ausschleusungsvorgänge mit einem Befüllen des Auffangkorbs mit Partikeln können automatisiert durchgeführt werden. Auch das Entleeren des Auffangkorbs durch Öffnen des Schiebers bzw. der Klappe kann in einem automatisierten Vorgang oder alternativ manuell durchgeführt werden.

Um während des Betriebs Druckdichtigkeit zu gewährleisten, befindet sich zwischen dem Schieber bzw. der Klappe und der Austragöffnung des Auffangkorbs ein Dichtelement. Das Dichtelement kann passiv oder, in weiterer Ausführung, aktiv bzw. dynamisch ausgebildet sein, beispielsweise als eine mit Gas aufblasbare, umlaufende Profildichtung oder eine hydraulische, mit flüssigem Medium aufzupumpende Dichtung. Im Falle einer dynamischen bzw. aktiven Dichtung ist diese während des Filtrations-/Ausschleusungsbetriebs aufgepumpt und hält sowohl das unter Überdruck stehende Schutzgas als auch die Flüssigkeit und die Partikel in der Sammelkammer. Zur Entleerung der Sammelkammer und des Auffangkorbs wird der Druck aus der Dichtung abgelassen, woraufhin der Schieber bzw. die Klappe geöffnet wird. Nach dem erneuten Schließen des Schiebers bzw. der Klappe wird der Druck in der Dichtung wieder aufgebaut, so dass eine gasdichte Abdichtung gewährleistet ist.

Vorteilhafterweise befindet sich die Austragöffnung des Auffangkorbs, die von dem Schieber bzw. der Klappe verschlossen ist, zugleich im Bodenbereich der Sammelkammer, so dass mit dem Öffnen des Schiebers bzw. der Klappe die Partikel im Auffangkorb auch aus der Sammelkammer entfernt werden. Es ist nicht erforderlich, in der Sammelkammer eine zusätzliche Türe, Klappe oder einen Schieber anzuordnen.

Gemäß noch einer weiteren zweckmäßigen Ausführung weist der Auffangkorb eine sich von oben nach unten verjüngende Querschnittsform auf. Der Auffangkorb ist beispielsweise als ein Kegelstumpf oder Pyramidenstumpf ausgeführt und besitzt in seinem oben liegenden Bereich eine größere Querschnittsfläche als im unten liegenden Bereich, in welchem sich vorteilhafterweise auch die Austragöffnung befindet.

Gemäß weiterer zweckmäßiger Ausführung weist die Wandung des Auffangkorbs ein Filtergewebe auf, das für die Flüssigkeit durchlässig ist, jedoch die Partikel zurückhält. Der Auffangkorb filtert die Partikel aus der Flüssigkeit heraus, die die Wandung des Auffangkorbs passieren kann. Die Wandung des Auffangkorbs ist beispielsweise als ein feinmaschiges Drahtgeflecht ausgeführt.

Es kann gegebenenfalls zweckmäßig sein, an der Außenseite des Filtergewebes, das die Wandung des Auffangkorbs bildet, eine Stützstruktur anzuordnen, beispielsweise ein Drahtgeflecht, das gegebenenfalls grobmaschig ausgebildet sein kann, oder ein Gitter, um die Stabilität der Wandung zu verbessern und dem nach außen gerichteten Druck besser standzuhalten.

Gemäß noch einer weiteren zweckmäßigen Ausführung ist der Boden des Auffangkorbs und/oder der Boden der Sammelkammer geneigt ausgebildet, um ein Abfließen der aufgefangenen Flüssigkeit zu ermöglichen.

Gemäß noch einer weiteren zweckmäßigen Ausführung ist oberhalb des Auffangkorbs ein Leitblech angeordnet, welches die Fallgeschwindigkeit der Flüssigkeit und der Partikel, die aus dem Ausschleusesystem herausfallen, abbremst und ein Einpressen der Partikel in den Auffangkorb verhindert. Der Partikelstrom kann über das Leitblech in eine die Entleerung des Auffangkorbs begünstigende Form und Position gebracht werden, so dass eine zu feste Einlagerung und Klumpenbildung der Partikel sowie ein Verstopfen des Auffangkorbs verhindert wird.

Der Schieber bzw. die Klappe zum Verschließen der Austragöffnung kann manuell oder über einen Aktor betätigt werden, beispielsweise über einen Elektromotor, einen pneumatischen Aktor oder einen hydraulischen Aktor.

Nach der Entleerung des Abtropfkorbes kann die Sammelkammer mit Schutzgas, beispielsweise Stickstoff geflutet werden, um den Sauerstoffgehalt unter einen Wert zu bringen, der eine Selbstentzündung der Partikel ermöglicht.

Die Sammelkammer kann mit einem mechanischen, groß dimensionierten Überdruckventil ausgestattet sein, welches ein Überfüllen und das Entstehen eines Überdruckes ausschließt.

Der Auffangkorb kann mit einem System aus Verteilerrohren und Düsen ausgestattet sein, welche über ein Ventil bei Bedarf schlagartig Schutzgas unter Druck in die angesammelten Krümel blasen können, um eventuelle Klumpen oder Verstopfungen zu lösen und ein problemloses Abfließen der Partikel zu ermöglichen.

Der Abtropfkorb kann mit Abweiserblechen ausgerüstet sein, welche ein unbeabsichtigtes Verteilen/Verstreuen der angesammelten Partikel in der Sammelkammer durch das Einblasen von Schutzgas verhindern.

Die Sammelkammer kann mit einer zuschaltbaren Heizung ausgerüstet sein, welche Öle und Fette bei Bedarf auf einer Temperatur halten, in der sie dünnflüssig sind und selbstständig ohne eine Verstopfung zu verursachen abfließen können.

Aus der Sammelkammer abführende Leitungen können mit einer zuschaltbaren elektrisch, dampf- oder anders betriebenen Rohrbegleitheizung ausgestattet sein, welche das Abkühlen und Festwerden des Öles/Fettes in den Leitungen verhindert.

Die Sammelkammer kann mit einer zuschaltbaren elektrischen Beleuchtung ausgestattet sein, welche es dem Bediener ermöglicht, über ein Schauglas den Zustand der Kammer und Füllgrad des Abtropfkorbes zu kontrollieren.

Die Sammelkammer kann mit einem Düsensystem ausgestattet sein, welches zur automatischen Reinigung Reinigungsflüssigkeit unter Druck in der Kammer versprüht.

Die aus der Sammelkammer abgehenden Ölleitungen können mit einem Ventilsystem ausgestattet sein, welches es erlaubt, Schutzgas unter Druck in jede Richtung der Leitung einzublasen, um eventuell in den Rohren auftretende Verstopfungen durch Partikel oder ausgehärtetes Fett zu lösen und somit zu beseitigen.

Die gesamte Anlage kann auf einer Arbeitsbühne erhöht aufgestellt sein, um die Platzierung eines Behälters (Rollcontainer) zur Aufnahme der abgekühlten Partikel unter dem System zu ermöglichen.

Der unter der Sammelkammer liegende Bereich, in dem der Rollcontainer abgestellt ist, kann durch Absperrungen abgetrennt und mit einer Zugangskontrolle zur Sicherheit der Werker ausgestattet sein.

Die Zugangskontrolle gestattet den Zugang zum Bereich zum Entnehmen des vollen Containers nur dann, wenn die Anlage im sicheren Zustand ist, d. h. alle Ventile so geschaltet sind, dass kein heißes Öl oder heiße Partikel austreten können, welche eine Gefahr für den Werker darstellen können.

Unter der Sammelkammer kann zur weiteren Entölung der Partikel eine Schneckenpresse oder ähnliche Anlage installiert werden, um die in der Partikelmasse enthaltenen Restölmengen zurückzugewinnen.

Gemäß noch einer weiteren zweckmäßigen Ausführung weist die Sammelkammer einen schräg verlaufenden Boden auf, welcher das restlose Ablaufen von Flüssigkeit, die in die Sammelkammer gelangt, in Richtung eines Kammersumpfes sicherstellt. Aus dem Kammersumpf, der ebenfalls einen schräg verlaufenden Boden aufweisen kann, kann die Flüssigkeit zu einem Sammelbecken abgeleitet werden.

Die Sammelkammer kann, insbesondere in der Ausführung als Druckkammer, ein Begasungsventil aufweisen, über das ein Gas, beispielsweise ein Inertgas in die Sammelkammer eingeführt werden kann, beispielsweise um chemische Reaktionen der Partikel, welche sich in der Sammelkammer befinden, zu verhindern.

Gemäß noch einer weiteren zweckmäßigen Ausführung ist die Vorfiltereinheit als Zentrifugalseparator ausgebildet, durch den die zu reinigende Flüssigkeit in einer Spiralbewegung geführt ist. Der Zentrifugalseparator ist vorzugsweise als passives Bauteil ausgeführt, wobei gegebenenfalls auch aktive Ausführungen mit einem rotatorisch angetriebenen Bauteil in Betracht kommen.

Die Ausschleuseeinheit kann ggf. sich nach unten konisch erweitern. In einer Ausführungsvariante ist die Ausschleuseeinheit zylindrisch oder näherungsweise zylindrisch ausgeführt.

Weitere Vorteile und zweckmäßige Ausführungen sind den weiteren Ansprüchen, der Figurenbeschreibung und den Zeichnungen zu entnehmen. Es zeigen:
- Fig. 1: in perspektivischer Ansicht eine Filteranlage zum Reinigen von Flüssigkeiten, die mit Partikeln kontaminiert ist, mit einer oben liegenden Vorfiltereinheit, einer unten angeordneten Sammelkammer und einer zwischenliegenden Ausschleuseeinheit,
- Fig. 2: die Filteranlage in einer ersten Seitenansicht,
- Fig. 3: die Filteranlage in einer zweiten Seitenansicht,
- Fig. 4: die Ausschleuseeinheit in einer ersten Seitenansicht,
- Fig. 5: die Ausschleuseeinheit in einer zweiten Seitenansicht,
- Fig. 6: die Ausschleuseeinheit in Draufsicht,
- Fig. 7: eine Seitenansicht der Sammelkammer,
- Fig. 8: in perspektivischer Ansicht ein Auffangkorb, der in der Sammelkammer angeordnet ist,
- Fig. 9: die Sammelkammer mit oben liegender Ausschleuseeinheit und einem Anschlussstück für die Vorfiltereinheit in einer Ausführungsvariante,
- Fig. 10: eine Sammelkammer mit einem fest installierten Auffangkorb, mit einer im Bodenbereich angeordneten Klappe zum Öffnen einer Austragöffnung, dargestellt in Seitenansicht,
- Fig. 11: die Sammelkammer mit Auffangkorb in einer weiteren Seitenansicht,
- Fig. 12: die Sammelkammer mit Auffangkorb in Draufsicht.

In den Figuren sind gleiche Bauteile mit gleichen Bezugszeichen versehen.

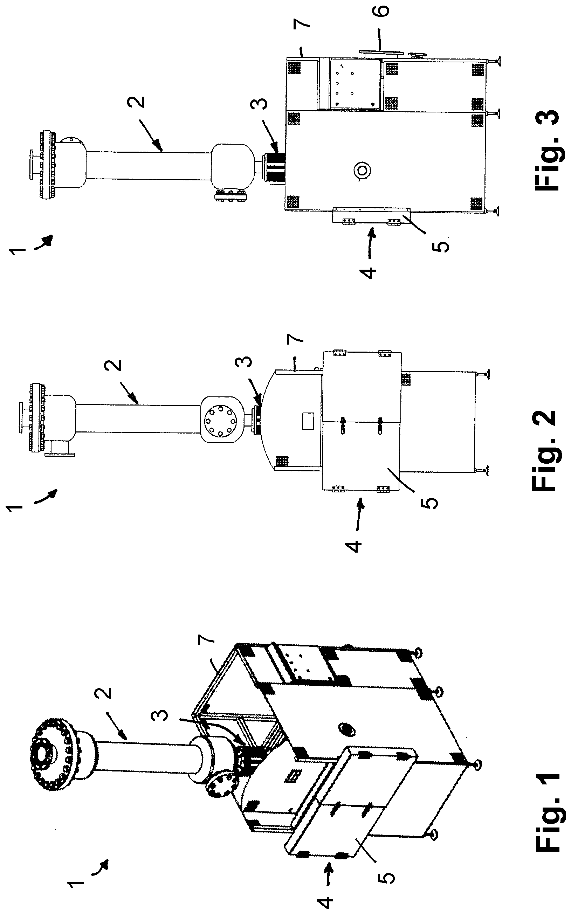

In den Fig. 1 und 3 ist eine Filteranlage 1 dargestellt, die zum Reinigen von Flüssigkeiten eingesetzt werden kann, das mit Partikeln kontaminiert ist. In der Filteranlage 1 können die Partikel aus der Flüssigkeit abgeschieden bzw. ausfiltriert und aus der Filteranlage abgeleitet werden; die gereinigte Flüssigkeit kann wieder einem Produktionsprozess zugeführt werden. Die Filteranlage 1 wird vorzugsweise zum Reinigen von Flüssigkeiten eingesetzt, die im Lebensmittelbereich verwendet werden, zum Beispiel von Frittieröl, das mit Krümeln aus dem Frittierprozess verunreinigt ist. Die Krümel werden als Partikel in der Filteranlage 1 abgeschieden.

Die Filteranlage 1 umfasst eine Vorfiltereinheit 2, eine Ausschleuseeinheit 3 und eine Sammelkammer 4. Die Vorfiltereinheit 2 ist mit der Ausschleuseeinheit 3 und diese mit der Sammelkammer 4 verbunden. Die zu reinigende Flüssigkeit wird zunächst in die Vorfiltereinheit 2 geführt, in der die Partikel aus der Flüssigkeit abgeschieden werden. Die Vorfiltereinheit 2 ist als ein Zentrifugalseparator ausgebildet, in welchem sich die Partikel am Boden der Vorfiltereinheit 2 anlagern. Die Vorfiltereinheit 2 ist zylindrisch ausgebildet, ihre Längsachse verläuft in Vertikalrichtung.

Am Boden der Vorfiltereinheit 2 befindet sich die Ausschleuseeinheit 3, die die Verbindung zu der unten stehenden Sammelkammer 4 herstellt. In der Ausschleuseeinheit 3 werden abgeschiedene Partikel aus der Vorfiltereinheit 2 zwischengelagert, bis ein definierter Füllstand in der Ausschleuseeinheit 3 erreicht ist. Daraufhin werden die Partikel aus der Ausschleuseeinheit 3 in die darunter liegende Sammelkammer 4 abgelassen.

An der Sammelkammer 4 ist eine Sicherheitstür 5 angeordnet, die nur geöffnet werden kann, wenn sicherheitsrelevante Kriterien erfüllt sind. Die Sammelkammer 4 ist als Druckkammer ausgebildet und in der Lage, bei geschlossener Sicherheitstür 5 einen definierten Überdruck aufzunehmen. Die Sicherheitstür 5 kann nur geöffnet werden, wenn der Druck in der Sammelkammer 4 unterhalb eines Druckgrenzwertes liegt.

Auf der der Sicherheitstür 5 gegenüberliegenden Seite ist die Sammelkammer 4 mit einem Rohranschlussstutzen 6 versehen, an den ein Ablaufrohr mit einem Überdruckventil angeschlossen werden kann. Für den Fall eines unzulässig hohen Druckanstiegs in der Sammelkammer 4 öffnet das Überdruckventil, so dass der Überdruck über den Rohranschlussstutzen 6 und das angeschlossene Ablaufrohr mit dem Überdruckventil abgebaut werden kann. Beispielsweise für den Fall eines Flüssigkeitseinbruchs über die Ausschleuseeinheit 3 in die Sammelkammer 4 kann die Flüssigkeit über das Ablaufrohr wieder in den Funktionskreislauf oder ein Sammelbecken zurückgeführt werden.

Die Sammelkammer 4 befindet sich in einem Gestell 7, das Träger der Sammelkammer sowie der weiteren Einheiten der Filteranlage 1 ist, also der Vorfiltereinheit 2 und der Ausschleuseeinheit 3.

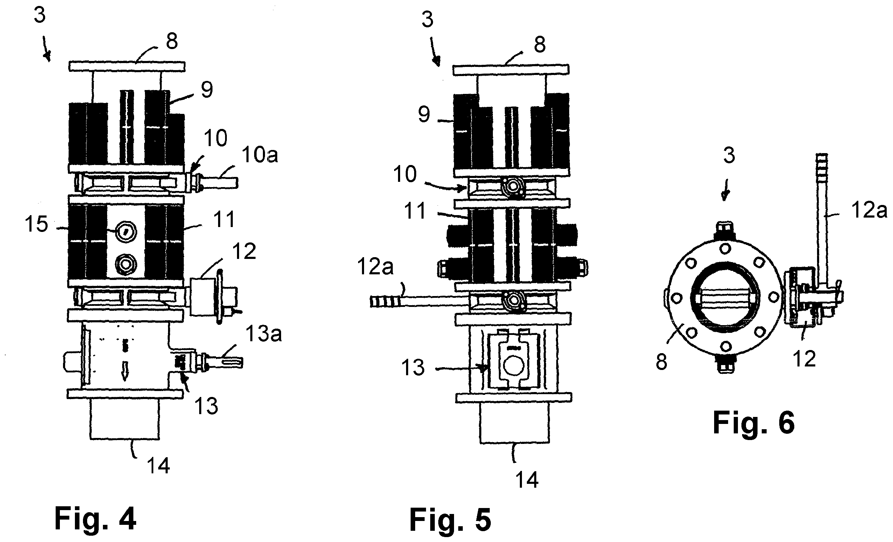

Wie den Fig. 4 bis 6 zu entnehmen, ist die Ausschleuseeinheit 3 näherungsweise zylindrisch mit vertikaler Längsachse ausgebildet. Die Ausschleuseeinheit 3 umfasst von oben nach unten ein oben liegendes Anschlussstück 8 für den Anschluss an die Vorfiltereinheit 2, ein Reservoir 9 mit Kühlrippen, ein erstes, oben liegendes Ventil 10, ein Partikelsammelvolumen 11, ein manuelles Ventil 12, ein zweites, unten liegendes Ventil 13 sowie ein unteres Anschlussstück 14 für die Verbindung zur Sammelkammer. Das Partikelsammelvolumen 11, das beispielsweise als ein Partikelsammelrohr ausgebildet ist, ist mit einem Füllstandsensor 15 versehen, um den aktuellen Füllstand im Partikelsammelvolumen feststellen zu können. Erreicht der Füllstand einen vordefinierten Grenzwert, so kann ein Signal erzeugt werden, um die Ventile 10 und 13 selbsttätig zu schalten. Auf diese Weise kann das Partikelsammelvolumen 11 regelmäßig in die darunter liegende Sammelkammer entleert werden. Im Partikelsammelvolumen 11 können gegebenenfalls weitere Sensoren angeordnet sein, beispielsweise Druck- und/oder Temperatursensoren zur Messung des aktuellen Drucks bzw. der Temperatur im Inneren der Ausschleuseeinheit 3.

Das erste Ventil 10 und das zweite Ventil 13 sind über einen Aktuator betätigbar ausgebildet. Die Ventile 10 und 13 weisen Achsen 10a bzw. 13a auf, an denen jeweils ein Aktuator zur Verstellung des betreffenden Ventils zwischen einer Schließposition und einer Öffnungsposition angreift. Der Aktuator ist jeweils elektrisch, hydraulisch oder pneumatisch ausgeführt. Jedes Ventil 10, 13 ist unabhängig einstellbar.

Das weitere Ventil 12, welches das dritte Ventil in der Ausschleuseeinheit 3 bildet, ist manuell betätigbar ausgeführt und kann über einen Betätigungshebel 12a zwischen Öffnungs- und Schließposition verstellt werden. Das Partikelsammelvolumen 11 erstreckt sich von dem unteren bzw. zweiten Ventil 13 über das darüber liegende manuelle Ventil 12 hinaus zumindest bis zu dem ersten oben liegenden Ventil 10; gegebenenfalls kann auch das Reservoir 9, welches oberhalb des ersten Ventils 10 liegt, zum Partikelsammelvolumen 11 gehören.

Im Normalbetrieb werden in der Vorfiltereinheit 2, die vorzugsweise als Zyklon- bzw. Zentrifugalseparator ausgebildet ist, Partikel aus der zu reinigenden Flüssigkeit abgeschieden und über das Anschlussstück 8 über das geöffnete erste Ventil 10 und das geöffnete manuelle Ventil 12 in das Partikelsammelvolumen 11 in der Ausschleuseeinheit 3 geleitet. Das untere, zweite Ventil 13 befindet sich in der Schließstellung, so dass der Übergang zu der darunter liegender Sammelkammer 4 verschlossen ist.

Sobald ein definierter Füllstand in dem Partikelsammelvolumen 11 erreicht ist, werden die Ventile 10 und 13 vorzugsweise selbsttätig angesteuert und in ihre entgegengesetzte Position verstellt. Dementsprechend wird das oben liegende, erste Ventil 10 geschlossen und das unten liegende, zweite Ventil 13 geöffnet, so dass sich das Partikelsammelvolumen 11 nach unten in die Sammelkammer 4 entleeren kann. Das mittlere, manuelle Ventil 12 bleibt geöffnet. Nachdem sämtliche Partikel aus dem Partikelsammelvolumen 11 in die Sammelkammer 4 geströmt sind, werden die Ventile 10 und 13 erneut angesteuert und das unten liegende Ventil 13 geschlossen und das oben liegende Ventil 10 wieder geöffnet, so dass erneut Partikel aus der vorgeschalteten Vorfiltereinheit in das Partikelsammelvolumen 11 gelangen können.

Für den Fall, dass die Sammelkammer 4 entleert werden soll, werden aus Sicherheitsgründen sämtliche Ventile 10, 12 und 13 geschlossen. Die automatisch betätigbaren Ventile 10 und 13 werden über eine entsprechende Ansteuerung ihrer Aktuatoren in die Schließposition versetzt, das mittlere, dritte Ventil 12 wird manuell geschlossen. Über Sensoren kann der aktuelle Zustand der Ventile 10, 12, 13 überwacht, insbesondere die Schließposition der Ventile detektiert werden. Erst wenn sämtliche Ventile 10, 12, 13 geschlossen sind, lässt sich vorteilhafterweise die Sicherheitstür 5 der Sammelkammer 4 öffnen.

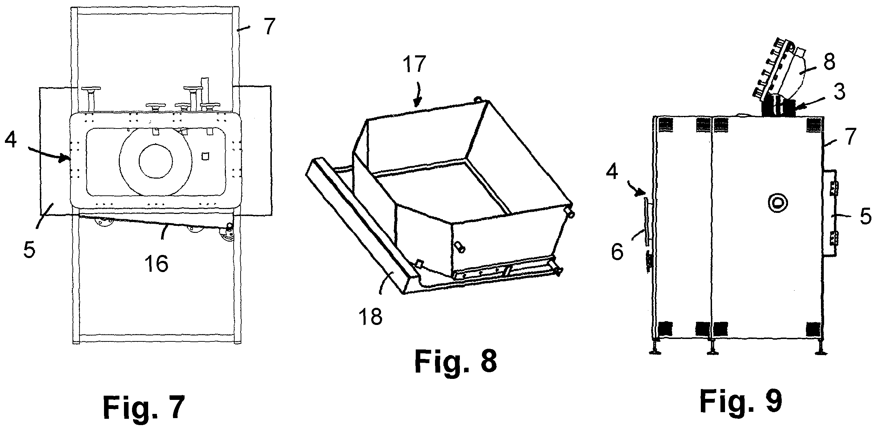

Wie der Schnittdarstellung der Sammelkammer 4 gemäß Fig. 7 zu entnehmen, besitzt die Sammelkammer 4 einen schräg geneigten Boden 16, der ein seitliches Ablaufen von Flüssigkeit, die in die Sammelkammer gelangt ist, in Richtung einer Auffangwanne ermöglicht, aus der die Flüssigkeit abgeleitet werden kann.

In Fig. 8 ist ein Auffangkorb 17 dargestellt, der in der Sammelkammer 4 angeordnet ist und zum Auffangen der Partikel aus der Ausschleuseeinheit dient. Der Auffangkorb 17 ist vorzugsweise als ein Rollwagen ausgeführt und weist seitliche Rollen auf, über den der Auffangkorb 17 aus der Sammelkammer 4 heraus bzw. in diese hinein verfahren werden kann. Der Auffangkorb 17 ist mit einer Tropfleiste 18 ausgestattet, welche Restflüssigkeitsmengen auffängt und zurückhält, die beim Entleeren des Auffangkorbs 17 verschüttet werden. Der Behälter des Auffangkorbs 17 kann kippbar ausgebildet sein.

In der Ausführungsvariante gemäß Fig. 9 ist die Ausschleuseeinheit 3 mit einem schräg gestellten oberen Anschlussstück 8 versehen, das es ermöglicht, die Verbindung zu einer in entsprechender Weise schräg gestellte Vorfiltereinheit herzustellen.

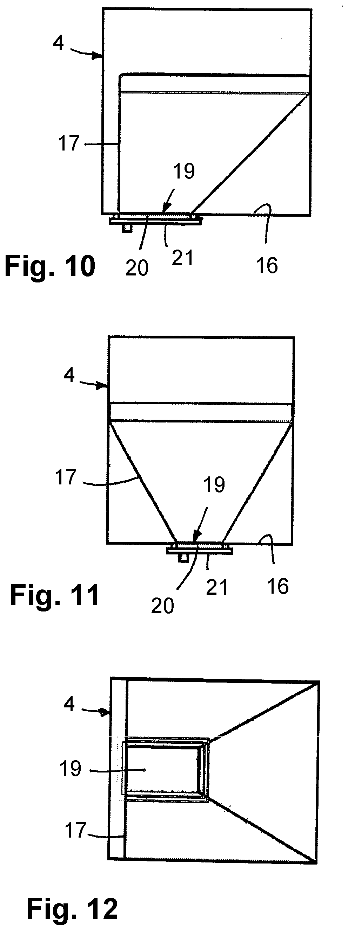

In den Fig. 10 bis 12 ist eine Sammelkammer 4 mit einem darin aufgenommenen Auffangkorb 17 in einer Ausführungsvariante dargestellt. Der Auffangkorb 17, der einen Abtropfkorb bildet, ist fest in der Sammelkammer 4 installiert. Der Auffangkorb 17 weist eine sich von oben nach unten verjüngende Querschnittsform auf und ist beispielsweise als ein auf dem Kopf stehender Pyramidenstumpf ausgebildet. Die Partikel einschließlich Öl fallen während des Ausschleusungsbetriebs von oben in den nach oben offenen Auffangkorb hinein, wobei aufgrund des verhältnismäßig großen Volumens des Auffangkorbs mehrere Ausschleusungszyklen durchlaufen werden können, bevor eine Entleerung des Auffangkorbs erforderlich ist. Die Wandung des Auffangkorbs besteht aus einem Filtergewebe, beispielsweise ein engmaschiges Drahtgeflecht, wobei zur Verbesserung der Stabilität auf der Außenseite der Wandung eine Stützstruktur angeordnet sein kann, beispielsweise ein grobmaschiges Drahtgeflecht oder ein Gitter. Das Öl, welches gemeinsam mit den Partikeln in den Auffangkorb gelangt, kann durch das Filtergewebe des Auffangkorbs abströmen, wohingegen die Partikel im Auffangkorb verbleiben. Abgeströmtes Öl wird über den Boden 16 der Sammelkammer 4 abgeleitet, die zu diesem Zweck geneigt sein kann.

Der Boden 16 der Sammelkammer 4 bildet zugleich den Boden des Auffangkorbs 17. In den Boden 16 ist im Bereich des Auffangkorbs 17 eine Austragöffnung 19 eingebracht, die von einer Klappe bzw. einem Schieber 21 verschlossen ist. Um einen druckdichten Abschluss zu gewährleisten, befindet sich zwischen der Klappe bzw. dem Schieber 21 und dem Boden 16 eine Dichtung 20, die entweder als passive Dichtung oder als dynamische bzw. aktive Dichtung ausgebildet ist, welche hydraulisch oder pneumatisch aufblasbar bzw. befüllbar ist.

Die Betätigung der Klappe bzw. des Schiebers 21 erfolgt entweder manuell oder über einen Aktor, beispielsweise einen Elektromotor oder einen hydraulischen oder pneumatischen Aktor.

Zum Entleeren des Auffangkorbs 17 wird die Klappe bzw. der Schieber 21 geöffnet, so dass die in dem Auffangkorb 17 aufgenommenen Partikel nach unten entleert und beispielsweise in einem darunter stehenden Container aufgefangen werden.

## Patentansprüche

1. Filteranlage zum Reinigen von Flüssigkeiten, beispielsweise von Ölen oder Fetten aus dem Lebensmittelbereich, mit einer Vorfiltereinheit (2) zur Separierung von Partikeln aus der Flüssigkeit, mit einer der Vorfiltereinheit (2) nachgeschalteten Ausschleuseeinheit (3) zur Zwischenlagerung der Partikel und mit einer der Ausschleuseeinheit (3) nachgeschalteten Sammelkammer (4) für die Partikel, wobei die Ausschleuseeinheit (3) mindestens zwei in Reihe angeordnete, separat betätigbare Ventile (10, 13) und ein zwischen den Ventilen angeordnetes Partikelsammelvolumen (11) umfasst, wobei in dem Partikelsammelvolumen (11) ein Füllstandssensor (15) zur Ermittlung des Partikelfüllstandes angeordnet ist, wobei in der Sammelkammer (4) ein Auffangkorb (17) zum Auffangen der Partikel aus dem Partikelsammelvolumen (11) angeordnet ist, wobei sich die Vorfiltereinheit (2) oberhalb der Ausschleuseeinheit (3) und diese wiederum oberhalb der Sammelkammer (4) befindet, so dass die Partikel der Schwerkraft folgend von der Vorfiltereinheit (2) in das Partikelsammelvolumen (11) in der Ausschleuseeinheit (3) gelangen und von dort weiter in die Sammelkammer (4), in der die Partikel in dem Auffangkorb (17) aufgefangen werden, wobei die ersten beiden Ventile (10, 13) über jeweils einen Aktuator zwischen einer Schließ- und einer Öffnungsstellung schaltbar sind, wobei die Ausschleuseeinheit (3) ein drittes Ventil (12) aufweist, das zwischen dem ersten und dem zweiten Ventil (10, 13) angeordnet und manuell zwischen einer Schließ- und einer Öffnungsstellung schaltbar ist.

2. Filteranlage nach Anspruch 1,
**dadurch gekennzeichnet,**
**dass** der Auffangkorb (17) eine untenliegende Austragöffnung (19) aufweist, die von einem Schieber oder einer Klappe (21) verschlossen ist.

3. Filteranlage nach Anspruch 2,
**dadurch gekennzeichnet,**
**dass** der Schieber bzw. die Klappe (21) über eine Dichtung (20) die Austragöffnung (21) druckdicht verschließt.

4. Filteranlage nach Anspruch 2 oder 3,
**dadurch gekennzeichnet,**
**dass** die Austragöffnung (21) sich im Boden des Auffangkorbs (17) und zugleich im Boden (16) der Sammelkammer (4) befindet.

5. Filteranlage nach einem der Ansprüche 1 bis 4,
**dadurch gekennzeichnet,**
**dass** der Auffangkorb (17) eine sich von oben nach unten verjüngende Querschnittsform aufweist.

6. Filteranlage nach einem der Ansprüche 1 bis 5,
**dadurch gekennzeichnet,**
**dass** die Wandung des Auffangkorbs (17) ein Filtergewebe aufweist, das für die Flüssigkeit durchlässig ist.

7. Filteranlage nach einem der Ansprüche 1 bis 6,
**dadurch gekennzeichnet,**
**dass** an die Sammelkammer (4) ein Ablaufrohr mit einem Überdruckventil angeschlossen ist.

8. Filteranlage nach einem der Ansprüche 1 bis 7,
**dadurch gekennzeichnet,**
**dass** die Sammelkammer (4) als Druckkammer ausgebildet ist.

9. Filteranlage nach einem der Ansprüche 1 bis 8,
**dadurch gekennzeichnet,**
**dass** die Vorfiltereinheit (2) als Zentrifugalseparator ausgebildet ist, durch den die zu reinigende Flüssigkeit in einer Spiralbewegung geführt ist.

## Claims

1. Filter system for cleaning liquids, for example oils or fats from the food industry, having a pre-filter unit (2) for separating particles from the liquid, having a discharge unit (3) for the intermediate storage of the particles, which is arranged downstream of the pre-filter unit (2), and having a collecting chamber (4) for the particles, which is arranged downstream of the discharge unit (3), wherein the discharge unit (3) comprises at least two valves (10, 13), which are able to be actuated separately and are arranged in series, and a particle collecting volume (11), which is arranged between the valves, wherein a fill level sensor (15) for determining the particle fill level is arranged in the particle collecting volume (11), wherein a collecting basket (17) for collecting the particles from the particle collecting volume (11) is arranged in the collecting chamber (4), wherein the pre-filter unit (2) is situated above the discharge unit (3) and the latter is in turn situated above the collecting chamber (4), with the result that the particles, following the gravitational force, pass from the pre-filter unit (2) into the particle collecting volume (11) in the discharge unit (3) and, from there, further into the collecting chamber (4), in which the particles are collected in the collecting basket (17), wherein the first two valves (10, 13) are able to be switched between a closed position and an open position via in each case one actuator, wherein the discharge unit (3) has a third valve (12), which is arranged between the first and second valves (10, 13) and is able to be manually switched between a closed position and an open position.

2. Filter system according to Claim 1,
**characterized**
**in that** the collecting basket (17) has a discharge opening (19) on the bottom side, which is closed off by a slide or a flap (21).

3. Filter system according to Claim 2,
**characterized**
**in that** the slide or the flap (21) closes off the discharge opening (21) in a pressure-tight manner via a seal (20).

4. Filter system according to Claim 2 or 3,
**characterized**
**in that** the discharge opening (21) is situated in the base of the collecting basket (17) and at the same time in the base (16) of the collecting chamber (4).

5. Filter system according to one of Claims 1 to 4,
**characterized**
**in that** the collecting basket (17) has a cross-sectional shape which tapers from the top downwards.

6. Filter system according to one of Claims 1 to 5,
**characterized**
**in that** the wall of the collecting basket (17) has a filter fabric which is permeable to the liquid.

7. Filter system according to one of Claims 1 to 6,
**characterized**
**in that** an outflow pipe with an overpressure valve is connected to the collecting chamber (4).

8. Filter system according to one of Claims 1 to 7,
**characterized**
**in that** the collecting chamber (4) is designed as a pressure chamber.

9. Filter system according to one of Claims 1 to 8,
**characterized**
**in that** the pre-filter unit (2) is designed as a centrifugal separator, through which the liquid to be cleaned is guided in a spiral movement.

## Revendications

1. Installation de filtre pour le nettoyage de liquides, par exemple d'huiles ou de graisses dans le domaine alimentaire, avec une unité de préfiltre (2) destinée à éliminer des particules hors du liquide, avec une unité d'évacuation (3) installée après l'unité de préfiltre (2) pour le dépôt intermédiaire des particules et avec une chambre de collecte (4) pour les particules installée après l'unité d'évacuation (3), dans laquelle l'unité d'évacuation (3) comprend au moins deux soupapes (10, 13) disposées en série et actionnables séparément et un volume de collecte des particules (11) disposé entre les soupapes, dans laquelle un détecteur de niveau de remplissage (15) est disposé dans le volume de collecte des particules (11) pour la détermination du niveau de remplissage de particules, dans laquelle un panier de collecte (17) est disposé dans la chambre de collecte (4) pour capturer les particules à partir du volume de collecte des particules (11), dans laquelle l'unité de préfiltre (2) se trouve au-dessus de l'unité d'évacuation (3) et celle-ci se trouve de nouveau au-dessus de la chambre de collecte (4), de telle manière que les particules passent de l'unité de préfiltre (2) dans le volume de collecte des particules (11) dans l'unité d'évacuation (3) en suivant la gravité et de là ensuite dans la chambre de collecte (4), dans laquelle les particules sont capturées dans le panier de collecte (17), dans laquelle les deux premières soupapes (10, 13) peuvent être commutées chacune au moyen d'un actionneur entre une position de fermeture et une position d'ouverture, dans laquelle l'unité d'évacuation (3) présente une troisième soupape (12), qui est disposée entre la première et la deuxième soupapes (10, 13) et qui peut être commutée manuellement entre une position de fermeture et une position d'ouverture.

2. Installation de filtre selon la revendication 1, **caractérisée en ce que** le panier de collecte (17) présente une ouverture d'extraction (19) située dans le bas, qui est fermée au moyen d'un tiroir ou d'un clapet (21) .

3. Installation de filtre selon la revendication 2, **caractérisée en ce que** le tiroir ou le clapet (21) ferme l'ouverture d'extraction (21) de façon étanche à la pression au moyen d'un joint d'étanchéité (20).

4. Installation de filtre selon une revendication 2 ou 3, **caractérisée en ce que** l'ouverture d'extraction (21) se trouve dans le fond du panier de collecte (17) et en même temps dans le fond (16) de la chambre de collecte (4) .

5. Installation de filtre selon l'une quelconque des revendications 1 à 4, **caractérisée en ce que** le panier de collecte (17) présente une forme de section transversale se rétrécissant du haut vers le bas.

6. Installation de filtre selon l'une quelconque des revendications 1 à 5, **caractérisée en ce que** la paroi du panier de collecte (17) présente un tissu de filtre, qui est perméable au liquide.

7. Installation de filtre selon l'une quelconque des revendications 1 à 6, **caractérisée en ce qu'**un tube d'évacuation avec une soupape de surpression est raccordé à la chambre de collecte (4).

8. Installation de filtre selon l'une quelconque des revendications 1 à 7, **caractérisée en ce que** la chambre de collecte (4) est formée par une chambre de pression.

9. Installation de filtre selon l'une quelconque des revendications 1 à 8, **caractérisée en ce que** l'unité de préfiltre (2) est formée par un séparateur centrifuge, par lequel le liquide à nettoyer est guidé en un mouvement hélicoïdal.
